Europäisches Patentamt

**European Patent Office**

**Office européen des brevets**

(11) Veröffentlichungsnummer: **0 409 083 A1**

# EUROPÄISCHE PATENTANMELDUNG

(21) Anmeldenummer: **90113354.6**

(22) Anmeldetag: **12.06.90**

(51) Int. Cl.5: **C01B 33/152**

(30) Priorität: **21.07.89 DE 3924243**

(43) Veröffentlichungstag der Anmeldung:
**23.01.91 Patentblatt 91/04**

(84) Benannte Vertragsstaaten:
**AT BE CH DE DK ES FR GB IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Dolhaine, Hans, Dr.**
**Mercatorstrasse 15**
**D-4000 Düsseldorf(DE)**
Erfinder: **Wolf-Leistikow, Irene, Dr.**
**Lötterfelder Strasse 7**
**D-4005 Meerbusch(DE)**

(54) **Verfahren zur Herstellung von SiO2-Aerogelen (II).**

(57) Die Erfindung beschreibt ein Verfahren zur Herstellung von $SiO_2$-Aerogelen. Hierzu wird Polykieselsäure aus Wasserglas extrahiert und die $SiO_2$-Aerogele aus einem Solvenz-$SiO_2$-Extrakt auf direktem Wege oder unter Zugabe von Polykieselsäureestern und/oder Basen durch überkritische Behandlung unter Abdestillation des organischen Lösungsmittels hergestellt.

EP 0 409 083 A1

## VERFAHREN ZUR HERSTELLUNG VON SIO₂-AEROGELEN (II)

Die Erfindung betrifft ein verbessertes Verfahren zur Herstellung von SiO₂-Aerogelen aus Wasserglas.

Im allgemeinen sind Aerogele hochporöse Materialien aus Silicium-oder Metalloxiden, die sich durch besonders niedrige Dichten von 70 bis 300 $kg/m^3$ bei extrem hohen inneren Oberflächen von bis zu 1000 $m^2/g$ auszeichnen. Aufgrund dieser Eigenschaften eignen sich insbesondere die SiO₂-Aerogele in hervorragender Weise als Wärme-und Schalldämmstoffe, als Katalysatorträger und als Adsorbtionsmaterial.

Die Herstellung von SiO₂-Aerogelen kann nach dem Stand der Technik auf zwei verschiedenen Wegen über einen Sol-Gel-Prozeß mit anschließender überkritischer Trocknung erfolgen.

Beim sogenannten Kistler-Verfahren (S.S. Kistler, J. Phys. Chem. 36 , (1932), Seiten 52-64) wird Wasserglas als Ausgangsprodukt verwendet. Durch Ansäuern von Wasserglas mit HCl oder $H_2SO_4$ wird ein Silica-Hydrogel erzeugt, das anschließend durch Auswaschen mit Wasser von Alkalimetallionen befreit wird. Im Hydrogel enthaltenes Wasser wird danach in einem Schritt gegen 95 %igen Alkohol (Ethanol, Methanol) vollständig ausgetauscht. Anschließend erfolgt überkritische Trocknung des entstandenen SiO₂-Alkogels im Autoklaven.

Da die Trocknung von SiO₂-Alkogelen hohe Temperaturen und hohe Drücke erfordert, wurde ein Trockenverfahren aus $CO_2$ entwickelt (EP 171.722), wobei vor der überkritischen Trocknung das organische Lösungsmittel gegen $CO_2$ ausgetauscht wird. Die überkritische Trocknung aus $CO_2$ erfolgt bei wesentlich geringeren Temperaturen ($T_k$ = 31.1 °C, $p_k$ = 73,9 bar).

Das zweite Verfahren zur Herstellung von SiO₂-Aerogelen nach dem Stand der Technik geht direkt von SiO₂-Alkogelen aus [DE 18 11 353, US 36 72 833]. Zur Erzeugung von SiO₂-Aerogelen werden Tetramethoxysilan in Methanol bzw. Tetraethoxysilan in Ethanol mit einer genau dosierten Menge Wasser versetzt. Bei der Hydrolyse bildet sich unter Alkohol-Abspaltung Kieselsäure, die wiederum unter $H_2O$-Abspaltung ein SiO₂-Gel ausbildet (Sol/Gel-Prozeß). Das so entstandene Alkogel wird überkritisch im Autoklaven getrocknet.

Der vorliegenden Erfindung liegt demgegenüber die Aufgabe zugrunde, in einfacher, großtechnischer Weise SiO₂-Aerogele, insbesondere aus dem relativ preiswerten Rohstoff Wasserglas in einem gegenüber dem Stand der Technik verkürzten und damit weniger zeitaufwendigen und kostengünstigeren Verfahren herzustellen.

Diese Aufgabe wird erfindungsgemäß durch ein Verfahren zur Herstellung von SiO₂-Aerogelen aus säurebehandeltem Wasserglas unter intermediärer Bildung von Polykieselsäure gelöst, das dadurch gekennzeichnet ist, daß man anschließend die gebildete Polykieselsäure mit einem organischen Lösungsmittel extrahiert, den gebildeten Solvenz-SiO₂-Extrakt entweder direkt oder unter Zugabe von Polykieselsäureestern und/oder Basen überkritischen Bedingungen unterwirft und die organischen Lösungsmittel unter Entspannung abdestilliert.

Die für das erfindungsgemäße Verfahren als Edukte einzusetzenden Solvenz-SiO₂-Extrakte, die man auch als Lösungsmittel/Polykieselsäure-Extrakte bezeichnen kann, lassen sich in bekannter Weise, wie in US 2,395,880 oder Abe et al. (1984), Journal of Polymer Science; Polymer Chemistry Edition, Vol. 22, Seiten 3759 - 3769 beschrieben, herstellen, indem Alkalimetallwassergläser zu Mineralsäuren, beispielsweise Schwefelsäure, Salzsäure, Phosphorsäure und/oder Salpetersäure gegeben werden. Vorzugsweise werden handelsübliche wäßrige Natrium- und/oder Kaliumwasserglaslösungen mit Molverhältnissen Siliciumdioxid : Alkalimetalloxid im Bereich zwischen (1 bis 4):1 eingesetzt. Besonders reaktive Polykieselsäuren werden erhalten, wenn der 5i02-Gehalt der Wasserglaslösungen vor dem Ansäuern unterhalb 15 Gew.-%, vorzugsweise unterhalb 12 Gew.-% liegt. Die Wasserglaslösungen werden den Mineralsäuren in solchen Mengen zugesetzt, daß der pH-Wert zwischen 1 und 4, vorzugsweise zwischen 1 und 3,5 und besonders bevorzugt zwischen 1,5 und 2,5 liegt. Dabei bilden sich wasserklare Polykieselsäurelösungen, die bei den genannten pH-Werten erst nach etwa 20 Stunden zu Gelen erstarren.

Um die Polykieselsäuren aus der wäßrigen Phase in die organische Phase zu transferieren, werden die wäßrigen Polykieselsäurelösungen mit einem organischen Lösungsmittel versetzt und zum Aussalzen mit Alkalimetallhalogeniden, beispielsweise Natriumchlorid, gesättigt. Anschließend wird die organische Phase abgetrennt und mit wasserfreiem Natriumsulfat getrocknet.

Erfindungsgemäß wird die Polykieselsäure mit einem kurzkettigen Alkohol, wie z. B. i-Propanol, n-Propanol, t-Butanol, n-Butanol, oder mit Tetrahydrofuran oder Aceton aus dem mit Säure behandelten Wasserglas extrahiert. Insbesondere bevorzugt werden i-Propanol oder t-Butanol als Extraktionsmittel eingesetzt, da beispielsweise t-Butanol mit $p_k$ = 39,5 bar einen relativ niedrigen kritischen Druck aufweist.

Das auf diesem Weg erzeugte Solvenz-SiO₂-Extrakt wird in einer Ausführungsform dieser Erfindung direkt im Autoklaven unter Vergelung überkritischen Bedingungen unterworfen, wobei das gewünschte $SiO_2$-Aerogel resultiert. Die überkritische Behandlung erfolgt im Autoklaven bei Temperaturen von 250 bis 300 °C und Drücken von 60 bis 200 bar. Besonders bevorzugt wird eine Temperatur von 280 °C bei einem Druck von 100 bis 160 bar. Nach der überkritischen Trocknung wird das $SiO_2$-Aerogel durch das Abdestillieren des organischen Lösungsmittels beim Entspannungsvorgang bei Temperaturen von 250 bis 300 °C in wenigstens 2 bis höchstens 6 Stunden in reiner Form erhalten.

Modifizierte $SiO_2$-Aerogele lassen sich durch die Vorbehandlung des Solvenz-$SiO_2$-Extraktes mit Basen vor der überkritischen Behandlung sowie durch verschiedene $SiO_2$-Konzentrationen und Kombinationen aus beidem erhalten. Besonders bevorzugt wird Ammoniak und Natriumhydroxid als basischer Zusatz.

In einer weiteren bevorzugten Ausführungsform dieser Erfindung lassen sich $SiO_2$-Aerogele dadurch modifizieren, daß Mischungen von Solvenz-$SiO_2$-Extrakten und Polykieselsäureestern, die eine Alkanolkomponente mit 1 bis 8 C-Atomen enthalten, eingesetzt werden. Über die Menge der Einzelanteile können die $SiO_2$-Konzentrationen und Eigenschaften variiert werden, so daß der $SiO_2$-Gehalt der Mischung zwischen 2 und 10 Gew.-%, bevorzugt bei 2,5 bis 6 Gew.-% und insbesondere bei 2,5 bis 3 Gew.-% liegt. Hierzu wird vorzugsweise Polykieselsäureethylester und Polykieselsäurehexylester verwendet.

Eine weitere Variante zur $SiO_2$-Aerogelbildung besteht im Zusatz eines Polykieselsäureesters und einer Base zur Solvenz-$SiO_2$-Extraktlösung, wobei die anschließende überkritische Behandlung und das Abdestillieren des organischen Lösungsmittels beim Entspannungsvorgang zum $SiO_2$-Aerogel führt.

Die Herstellung der im Rahmen dieser Erfindung verwendeten Polykieselsäureester soll im folgenden anhand literaturbekannter Methoden geschildert werden. Eine Methode zur Herstellung von Polykieselsäurestern geht von Wasserglaslösungen aus (R. K. Iler, P. S. Pinkney in Industrial and Engineering Chemistry 39, 1379 (1947)). Beim Ansäuern der Wasserglaslösungen bilden sich aus den Silikatanionen die freien Kieselsäuren. Aus den primär vorliegenden niedermolekularen und nicht isolierbaren Kieselsäuren entstehen durch Kondensation Polykieselsäuren, die ihrerseits zu sphärischen Polykieselsäurepartikeln polymerisieren. Da sich Polykieselsäuren nicht in wäßriger Lösung mit Alkoholen verestern lassen (US 3 351 561), müssen Polykieselsäuren vor der Veresterung aus der wäßrigen Lösung in ein geeignetes organisches Lösungsmittel transferiert werden. Diese Lösungsmittel müssen wasserlöslich oder mit Wasser mischbar und durch Elektrolytzusatz wieder aussalzbar sein.

Während der Umsetzung der extrahierten Polykieselsäuren mit Alkoholen zu den entsprechenden Polykieselsäureestern muß das gebildete Reaktionswasser durch beispielsweise azeotrope Destillation oder durch Zusatz wasserbindender Mittel aus dem Reaktionsgemisch entfernt werden. Bei dem in Industrial and Engineering Chemistry 39, 1379 (1947) beschriebenen Verfahren wird mit t-Butanol extrahierte Polykieselsäure unter genauer Kontrolle von Druck und Reaktionstemperatur sowie Einhaltung einer bestimmten $SiO_2$-Konzentration mit n-Butanol verestert.

In Journal of Polymer Science, Polymer Chemistry Edition 22, 3759 (1984) wird ebenfalls die Herstellung von Polykieselsäureestern durch Veresterung von Polykieselsäure/Tetrahydrofuran-Lösungen mit Methanol, Ethanol, Isopropanol, n-Butanol, t-Butanol und Octanol in einer Veresterungsapparatur mit zwei Kolben beschrieben. Zunächst wird aus dem sich im Reaktionskolben befindenden Gemisch aus Polykieselsäure/Tetrahydrofuran-Lösung und Alkohol das Tetrahydrofuran mittels Destillation entfernt. Anschließend wird die Veresterung bei Temperaturen von 63 °C und höher durchgeführt, wobei das entstehende Alkohol/Wasser-Azeotrop in den zweiten Kolben zur Trocknung geleitet wird. Um das Volumen der Reaktionsmischung konstant zu halten, wird gleichzeitig getrockneter Alkohol aus dem zweiten Kolben wieder der Reaktionsmischung zugeführt.

Die durch das oben beschriebene Verfahren erhaltenen $SiO_2$-Aerogele sind sehr leicht (0,05 bis 0.15 $g/cm^3$), haben große innere Oberflächen 300 bis 1000 $m^2/g$ und eignen sich deshalb hervorragend als Wärme- und Schalldämmstoffe sowie als Katalysatorträger und Adsorbenzien.

Gegenüber dem Stand der Technik umfaßt das neue Verfahren weniger Arbeitsstufen. Diese Vereinfachung führt zu einer beträchtlichen Ersparnis von Zeit, Material und Kosten.

Beispiel 1

a) Isopropanol-$SiO_2$-Extrakt

450 g einer 7,35 %-igen wäßrigen Schwefelsäurelösung wurden mit einer Lösung von 194,5 g Wasserglas 37/40 in 284,5 g entionisiertem Wasser unter Rühren versetzt. Zu dieser Lösung wurden 1000 ml Isopropanol und 300 g Natriumchlorid zugegeben und eine Stunde bei Raumtemperatur gerührt. Anschließend wurde die wäßrige Phase im Scheidetrichter abgetrennt und die Isopropanolphase mehrmals mit 300 g wasserfreiem Natriumsulfat getrocknet. Das erhaltene Isopropanol-SiO₂-Extrakt enthielt im allgemeinen einen SiO₂-Gehalt von wenigstens 5,6 Gew.-%.

b) Tertiär-butanol-SiO₂-Extrakt

Ansatz und Verfahren analog 1a), wobei jedoch t-Butanol bei einer Temperatur von 30 °C aufgeschmolzen wurde und die Phasentrennung durch die dickflüssige organische Phase nur sehr langsam erfolgte. Das erhaltene t-Butanol-SiO₂-Extrakt enthielt im allgemeinen einen SiO₂-Gehalt von wenigstens 1,6 Gew.-%.

Beispiel 2

Aerogel aus Isopropanol-SiO₂-Extrakt

250 g Isopropanol-SiO₂-Extrakt (5,6 Gew.-% SiO₂) wurden mit 250 ml Ethanol vermischt, so daß die Mischung 2,8 Gew.-% SiO₂ enthielt. Die Mischung wurde ohne weitere Zusätze in einen Autoklaven gefüllt und in 2 Stunden auf 280 °C aufgeheizt, 30 min bei dieser Temperatur belassen und zur Isolierung des Aerogels das Isopropanol/Ethanol-Gemisch unter Entspannung bei 280 °C in 5 Stunden abdestilliert. Es resultierten 14 g eines weißen, federnden, druckempfindlichen Aerogeles mit einer inneren Oberfläche von 800 m²/g BET.

Beispiel 3

Aerogel aus Isopropanol-SiO₂-Extrakt/Polykieselsäureethylester-Gemisch

250 g Isopropanol-SiO₂-Extrakt (5,6 Gew.-% SiO₂) wurden mit 160 g Ethanol und 50 g Polykieselsäureethylester (9 Gew.-% SiO₂) vermischt, so daß die Mischung 3,7 Gew.-% SiO₂ enthielt. Die Mischung wurde im Autoklaven nach Aufpressen von 80 bar N₂-Vordruck auf 280 °C aufgeheizt und in 6 Stunden das Ethanol unter Entspannung bei 280 °C abdestilliert. Es resultierten 19 g eines weißen, sehr leichten, elastischen, druckempfindlichen Aerogelproduktes mit einer inneren Oberfläche von 800 m²/g BET.

Beispiel 4

Aerogel aus t-Butanol-SiO₂-Extrakt/Polykieselsäureethylester-Gemisch

300 g t-Butanol-SiO₂-Extrakt (1,6 Gew.-% SiO₂) wurde mit 50 g Polykieselsäureethylester (9 Gew.-% SiO₂) vermischt (2,7 Gew.-% SiO₂) und in einen Autoklaven gefüllt. Nach Aufpressen von 80 bar N₂ Vordruck wurde in 4 Stunden auf 280 °C aufgeheizt und der Alkohol in 5 Stunden unter Entspannung bei 280 °C abdestilliert. Es wurden 10 g eines sehr leichten, weißen, leicht zerfallenden Aerogeles erhalten mit einer inneren Oberfläche von 650 m²/g BET.

Beispiel 5

Aerogel aus t-Butanol-SiO₂-Extrakt/Polykieselsäureethylester-Gemisch

250 g t-Butanol-SiO₂-Extrakt (1,6 Gew.-% SiO₂) wurden mit 50 g Polykieselsäureethylester (9 Gew.-% SiO₂) und 2 ml 25 % wäßriger Ammoniak-Lösung vermischt, so daß die Mischung 2,75 Gew.-% SiO₂ enthielt. Die Mischung wurde im Auotklaven nach Aufpressen von 50 bar N₂ auf 280 °C aufgeheizt und der Alkohol unter Entspannung bei 280 °C in 5 Stunden abdestilliert. Es wurden 9 g eines bröckeligen, sehr leichten Aerogeles mit einer inneren Oberfläche von 700 m²/g BET erhalten.

Beispiel 6

Aerogel aus Aceton-SiO₂-Extrakt

200g Aceton-SiO₂-Extrakt (5,5 Gew.-% SiO₂) wurde mit 200 g Ethanol vermischt, so daß das Gemisch 2,75 Gew.-% SiO₂ enthielt. Die Mischung wurde im Autoklaven nach Aufpressen von 60 bar N₂ auf 280 °C aufgeheizt und das Aceton/Alkohol-Gemisch unter Entspannung bei 280 °C in 5 Stunden abdestilliert. Es wurden 11 g eines weißen, sehr leichten, elastischen, aber druckempfindlichen Aerogeles mit einer inneren Oberfläche von 700 m²/g BET erhalten.

Beispiel 7

Aerogel aus THF-SiO₂-Extrakt

130 g THF-SiO₂-Extrakt (5,3 Gew.-% SiO₂) wurden mit 130 g THF vermischt, so daß die Mischung 2,7 Gew.-% SiO₂ enthielt. Zur Gelbildung wurde 2 ml 25 %-ige Ammoniak-Lösung zugege-

ben, wobei Ausfällung von $SiO_2$-Gelklumpen erfolgte.

Die Mischung wurde nach Aufpressen von 80 bar $N_2$ auf 280 °C aufgeheizt und das THF unter Entspannung bei 280 °C abdestilliert. Es wurden 8 g eines hellbraunen, sehr feinteiligen, leichten Pulvers erhalten.

**Ansprüche**

1. Verfahren zur Herstellung von $SiO_2$-Aerogelen aus säurebehandeltem Wasserglas unter intermediärer Bildung von Polykieselsäure, dadurch gekennzeichnet, daß man anschließend die gebildete Polykieselsäure mit einem organischen Lösungsmittel extrahiert, den gebildeten Solvenz-$SiO_2$-Extrakt entweder direkt oder unter Zugabe von Polykieselsäureestern und/oder Basen überkritischen Bedingungen unterwirft und das organische Lösungsmittel unter Entspannung abdestilliert.

2. Verfahren nach Anspruch 1, dadurch gekennzeichnet, daß als organisches Lösungsmittel ein Alkanol mit 3 bis 4 C-Atomen, Tetrahydrofuran oder Aceton eingesetzt wird.

3. Verfahren nach Anspruch 2, dadurch gekennzeichnet, daß als Alkanol i-Propanol oder t-Butanol eingesetzt wird.

4. Verfahren nach Anspruch 1 bis 3, dadurch gekennzeichnet, daß dem Solvenz-$SiO_2$-Extrakt ein oder mehrere Polykieselsäureester mit einer Alkanolkomponente von 1 bis 8 C-Atomen zugegeben werden.

5. Verfahren nach Anspruch 4, dadurch gekennzeichnet, daß Polykieselsäureethylester oder Polykieselsäurehexylester zugegeben wird.

6. Verfahren nach Anspruch 1 bis 5, dadurch gekennzeichnet, daß der $SiO_2$-Gehalt der Solvenz-$SiO_2$-Extrakt/Polykieselsäureester- Mischung 2 bis 10 Gew.-% beträgt.

7. Verfahren nach Anspruch 6, dadurch gekennzeichnet, daß der $SiO_2$-Gehalt der Solvenz-$SiO_2$-Extrakt/Polykieselsäureester-Mischung bei 2,5 bis 6 Gew.-% liegt.

8. Verfahren nach Anspruch 1 bis 3, dadurch gekennzeichnet, daß dem Solvenz-$SiO_2$-Extrakt als Base Ammoniak oder Natriumhydroxid zugegeben wird.

9. Verfahren nach Anspruch 1 bis 8, dadurch gekennzeichnet, daß die überkritische Behandlung bei Temperaturen von 250 bis 300 °C und einem Druck von 100 bis 160 bar erfolgt.

10. Verfahren nach Anspruch 1 bis 9, dadurch gekennzeichnet, daß nach der überkritischen Behandlung das organische Lösungsmittel unter Entspannung bei Temperaturen von 250 bis 300 °C in wenigstens 2 Stunden bis höchstens 6 Stunden abdestilliert wird.

11. $SiO_2$-Aerogele erhalten nach Verfahren der Ansprüche 1 bis 10.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| L,A | CHEMICAL ABSTRACTS Band 111, Nr. 14, 2. Oktober 1989, Seite 416, Zusammenfassung Nr. 121571f, Columbus, Ohio, US; J. IURA et al.: "Silica aerogels prepared by the supercritical drying technique" & J. Phys. Colloq. 1989, (C4, Proc. Int. Symp. Aerogels-ISA 2, 2nd, 1988), C4-53/C4-58 --- | 1 | C 01 B 33/152 |
| A | CHEMICAL ABSTRACTS Band 107, Nr. 14, 5. Oktober 1987, Seite 126, Zusammenfassung Nr. 117793e, Columbus, Ohio, US; D. NGUYEN et al.: "Preparation of silica aerogel insulating material" & J. Can. Ceram. Soc. 1985, Nr. 54, Seiten 40-42 --- | 1 | |
| A | PATENT ABSTRACTS OF JAPAN Band 9, Nr. 301 (C-316)(2024), 28. November 1985; & JP-A-60141627 (OOSAKA SUISO KOGYO K.K.) 26.07.1985 --- | 1 | |
| A | US-A-3 977 993 (T.J. LYNCH) * Anspruch 1 * --- | 1 | **RECHERCHIERTE SACHGEBIETE (Int. Cl.5)**<br><br>C 01 B 33/00 |
| A | US-A-2 978 298 (J.W. WETZEL et al.) * Beispiel; Anspruch 1 * --- | 1 | |
| A,D | DE-A-1 811 353 (ETAT FRANCAIS) * Anspruch 1 * --- | 1 | |
| A,D | US-A-3 351 561 (W.L. ALBRECHT et al.) * Anspruch 7 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 11-10-1990 | CLEMENT J.P. |